# EUROPÄISCHE PATENTSCHRIFT

(11) **EP 3 887 187 B1**
(45) Veröffentlichungstag und Bekanntmachung des Hinweises auf die Patenterteilung: **26.02.2025**
(21) Anmeldenummer: 19813436.3
(22) Anmeldetag: 26.11.2019
(51) Int. Cl.: B60K 1/04, B60K 15/063, B60L 50/60, B60L 50/64

(54) **BATTERIEEINHEIT SOWIE HYBRIDFAHRZEUG MIT EINER BATTERIEEINHEIT**
BATTERY UNIT AND HYBRID VEHICLE WITH A BATTERY UNIT
UNITÉ DE BATTERIE ET VÉHICULE HYBRIDE COMPORTANT UNE UNITÉ DE BATTERIE

(30) Priorität: 30.11.2018 DE 102018130506
(43) Veröffentlichungstag der Anmeldung: 06.10.2021
(73) Patentinhaber: Kautex Textron GmbH & Co. KG, 53229 Bonn (DE)
(72) Erfinder: EULITZ, Dirk, 53115 Bonn (DE); GEBERT, Klaus, 47877 Willich (DE); LORENZ, Harald, 53474 Kirchdaun (DE); MARX, Daniel, 50181 Bedburg (DE); SIGGIA, Fabian, 51143 Köln (DE)
(74) Vertreter: Richly & Ritschel Patentanwälte PartG mbB
(86) Internationale Anmeldenummer: PCT/EP2019/082513
(87) Internationale Veröffentlichungsnummer: WO 2020/109273

(56) Entgegenhaltungen:
- WO-A2-01/79012
- DE-A1- 102010 007 414
- FR-A1- 2 976 252
- JP-A- 2008 155 880

## Beschreibung

Die Erfindung betrifft eine Batterieeinheit für ein Hybridfahrzeug. Ferner betrifft die Erfindung ein Hybridfahrzeug mit einer derartigen Batterieeinheit.

Hybridfahrzeuge weisen in der Regel sowohl einen Verbrennungsmotor als auch einen Elektromotor zum Antreiben des Kraftfahrzeugs auf. Für den Antrieb mittels Kraftstoff ist in dem Kraftfahrzeug ein Kraftstofftank angeordnet, in welchem der flüssige Kraftstoff gespeichert wird und von welchem aus der flüssige Kraftstoff zu dem Verbrennungsmotor geführt wird. Für den elektrischen Antrieb ist in dem Kraftfahrzeug üblicherweise eine zusätzlich und getrennt zu dem Kraftstofftank angeordnete Batterieeinheit vorgesehen, welche ein oder mehrere Batteriemodule aufweist, in welchen elektrische Energie gespeichert ist. Bei einem solchen Hybridfahrzeug ist die Ausgestaltung des Fahrgestells sehr aufwendig und schwierig, da beide Antriebskonzepte in dem Fahrgestell untergebracht werden müssen. Bislang werden die beiden Antriebskonzepte vollständig separat voneinander in dem Fahrgestell angeordnet, wobei meist die Fahrgestelle für den reinen verbrennungsmotorischen Antrieb verwendet werden und auf aufwendige Art und Weise und mit hohen Kosten die Batterieeinheit in dieses Fahrgestell mit integriert wird.

WO 01/79012 A2 offenbart ein Hybridmodul mit einem Gehäuse, in dem eine Antriebsbatterie und ein Kraftstofftank untergebracht sind.

Der Erfindung liegt die Aufgabe zugrunde, eine Batterieeinheit sowie ein Hybridfahrzeug zur Verfügung zu stellen, mittels welchen die Integration beider Antriebskonzepte eines Hybridfahrzeugs in einem Fahrgestell des Hybridfahrzeugs vereinfacht werden kann.

Die Aufgabe wird erfindungsgemäß mit den Merkmalen der unabhängigen Ansprüche gelöst. Zweckmäßige Ausgestaltungen und vorteilhafte Weiterbildungen der Erfindung sind in den Unteransprüchen angegeben.

Die Batterieeinheit gemäß der Erfindung zeichnet sich dadurch aus, dass in dem Batteriegehäuse mindestens ein Kraftstofftank angeordnet ist.

Erfindungsgemäß ist es nunmehr vorgesehen, den Kraftstofftank, in welchem der Kraftstoff für den verbrennungsmotorischen Antrieb des Hybridfahrzeugs gespeichert ist, mit in das Batteriegehäuse der Batterieeinheit zu integrieren. Die Batteriemodule und der Kraftstofftank sind damit in ein und demselben Gehäuse, dem Batteriegehäuse, angeordnet. Damit ist eine besonders platzsparende Anordnung des elektrischen Antriebs zusammen mit dem verbrennungsmotorischen Antrieb möglich. Zudem ist dadurch der Kraftstofftank und die Batterieeinheit nicht mehr separat voneinander an dem Fahrgestell des Hybridfahrzeugs anzuordnen, sondern der Kraftstofftank und die Batterieeinheit können als eine Einheit an dem Fahrgestell angeordnet werden, so dass der Aufwand zur Integration beider Antriebskonzepte in einem Fahrgestell wesentlich reduziert werden kann. Dadurch können die Sicherheitsmaßnahmen wesentlich reduziert werden, da der Kraftstofftank durch das üblicherweise sehr stabil ausgebildete Batteriegehäuse mit geschützt ist. Das Batteriegehäuse ist vorzugsweise derart ausgebildet, dass es den Kraftstofftank zusammen mit den Batteriemodulen vollständig umschließt. Die Batteriemodule und der Kraftstofftank sind vorzugsweise nebeneinander in dem Batteriegehäuse angeordnet. In dem Batteriegehäuse können ein oder mehrere Batteriemodule angeordnet sein. Ferner können in dem Batteriegehäuse auch ein oder mehrere Kraftstofftanks angeordnet sein.

Dadurch, dass der Kraftstofftank nunmehr durch das Batteriegehäuse geschützt ist, kann der mindestens eine Kraftstofftank aus einem Kunststoffmaterial ausgebildet sein. Der Kraftstofftank ist vorzugsweise bereits durch das speziell gegen Beschädigungen im Falle eines Unfalls des Hybridfahrzeugs ausgelegte Batteriegehäuse geschützt, sodass insbesondere ein Kunststoffmaterial für den Kraftstofftank verwendet werden kann, welches eine geringere Kälteschlagzähigkeit aufweist. Beispielsweise können als Kunststoffmaterial für den Kraftstofftank Polyphthalamide (PPA), Polyketone, Polyphenylensulfid (PPS), Polyoxymethylen (POM) und/oder Polyamid (PA) verwendet werden.

Durch die Möglichkeit des Einsatzes eines thermoplastischen Kunststoffmaterials für den Kraftstofftank kann der mindestens eine Kraftstofftank vorzugsweise in einem Spritzgussverfahren hergestellt sein. Die Herstellung des Kraftstofftanks kann dadurch mit einem reduzierten Aufwand und geringeren Kosten erfolgen. Ferner können hierbei besonders anforderungsoptimierte Wanddicken des Kraftstofftanks erreicht werden. Ferner können bei einem Einsatz eines Spritzgussverfahrens weitere Bauteile bzw. Funktionselemente, wie beispielsweise Schwallwände oder Schwalltöpfe, bereits bei der Ausbildung des Kraftstofftanks mit in den Kraftstofftank, insbesondere in die Wandung des Kraftstofftanks, eingebracht bzw. integriert werden. Weiter ist es auch möglich, dass der Kraftstofftank in einem Spritzgussverfahren hergestellt ist.

Der mindestens eine Kraftstofftank und das eine oder die mehreren Batteriemodule sind zusammen vorzugsweise in einem Paket angeordnet, sodass sie eine Einheit ausbilden. Beispielsweise kann der mindestens eine Kraftstofftank mit dem mindestens einem Batteriemodul in einer Reihe hintereinander angeordnet sein. Dadurch ist eine kompakte Anordnung von Kraftstofftank und Batteriemodulen in dem Batteriegehäuse möglich. Vorzugsweise können die ein oder mehreren Kraftstofftanks und die ein oder mehreren Batteriemodule hintereinander gestapelt angeordnet sein. Um insbesondere platzsparend in dem Fahrgestell des Hybridfahrzeugs integriert werden zu können, weist das Batteriegehäuse vorzugsweise eine flache, längliche Ausgestaltung auf, so dass das Batteriegehäuse niedrig aufbaut. In einem derartigen Batteriegehäuse können der Kraftstofftank und die ein oder mehreren Batteriemodule hintereinander gestapelt angeordnet sein.

Weiter ist es auch möglich, dass Batteriemodule auch übereinander gestapelt angeordnet sind. Somit können ein oder mehrere Reihen von Batteriemodulen in dem Batteriegehäuse angeordnet sein, bei welchem die Batteriemodule sowohl hintereinander als auch übereinander gestapelt angeordnet sein können.

Um den mindestens einen Kraftstofftank und die ein oder mehreren Batteriemodule möglichst kompakt als ein Paket anordnen zu können, weist der mindestens eine Kraftstofftank vorzugsweise eine Außenkontur auf, welche an eine Außenkontur des mindestens einen Batteriemoduls angepasst sein kann. Ist beispielsweise die Außenkontur der Batteriemodule rechteckförmig ausgebildet, ist auch die Außenkontur des mindestens einen Kraftstofftanks rechteckförmig ausgebildet. Durch die aneinander angepasste Außenkontur können Kraftstofftank und Batteriemodul unmittelbar ohne Platzverluste in dem Batteriegehäuse angeordnet werden. Vorzugsweise kann der Kraftstofftank flächig anliegend an einem Batteriemodul angeordnet sein.

Der mindestens eine Kraftstofftank ist bevorzugt als Drucktank ausgebildet. Ist der Kraftstofftank als Drucktank ausgebildet, kann das vorzugsweise steif ausgebildete Batteriegehäuse genutzt werden, um mögliche Verformungen des Kraftstofftanks bei einem Überdruck zu reduzieren. Ist der Kraftstofftank als Drucktank ausgebildet, so kann er vorzugsweise für Drücke von bis zu circa +500 mbar ausgelegt sein.

Zur Stabilisierung der Kraftstofftanks kann der mindestens eine Kraftstofftank ein oder mehrere in Richtung eines Innenraums des Kraftstofftanks ausgebildete Einbuchtungen und/oder mehrere an einer Innenseite des Kraftstofftanks ausgebildete Rippen aufweisen. Mittels der Rippen und/oder Einbuchtungen kann einem in dem Kraftstofftank entstehender Unterdruck und/oder Überdruck entgegengewirkt werden.

Um im Falle einer Beschädigung der Batteriemodule und/oder des Kraftstofftanks in dem Batteriegehäuse, beispielsweise bei einem Unfall des Hybridfahrzeugs, einen Druckausgleich in dem Batteriegehäuse erreichen zu können, beispielsweise bei einer Erwärmung der beschädigten Batteriemodule und/oder des Kraftstoffs in dem beschädigten Kraftstofftank, erfindungsgemäß weist das Batteriegehäuse mindestens eine Entgasungsöffnung auf.

Die Entgasungsöffnung ist vorzugsweise an der Frontseitenwand oder Heckseitenwand des Batteriegehäuses ausgebildet, so dass verhindert werden kann, dass heißes Gas und gegebenenfalls in dem Gas entstehende Flammen seitlich in Richtung der Fahrzeugtüren des Hybridfahrzeugs aus dem Batteriegehäuse austreten können. Bevorzugt weist das Batteriegehäuse mehr als eine Entgasungsöffnung auf, über welche unter Druck stehende Luft aus dem Batteriegehäuse entweichen kann. Mittels der Entgasungsöffnung ist ein kontrollierter und effizienter Druckabbau in dem Innenraum des Batteriegehäuses möglich.

Vorzugsweise ist es vorgesehen, dass das Batteriegehäuse eine erste Entgasungsöffnung und eine zweite Entgasungsöffnung aufweist, wobei die erste Entgasungsöffnung an der Frontseitenwand des Batteriegehäuses und die zweite Entgasungsöffnung an der Heckseitenwand des Batteriegehäuses angeordnet sein kann. Ist sowohl an der Frontseitenwand als auch an der Heckseitenwand des Batteriegehäuses eine Entgasungsöffnung angeordnet, so kann eine Entgasung zu zwei Seiten des Batteriegehäuses erfolgen. Durch die Anordnung der Entgasungsöffnungen an der Frontseitenwand und der Heckseitenwand kann bei einem Überschlagen des Hybridfahrzeuges im Falle eines Unfalls ein Austreten insbesondere von sich in dem Batteriegehäuse ausbreitenden Kraftstoff, wenn der Kraftstofftank beschädigt ist, verhindert werden, da die Entgasungsöffnungen auch bei einer Überschlagsbewegung des Batteriegehäuses zusammen mit dem Hybridfahrzeug ihre Position in Bezug auf ihre Höhe nicht verändern. Ferner kann dadurch verhindert werden, dass aus dem Batteriegehäuse entweichendes Gas oder in dem Gas enthaltende Flammen in Richtung der Seitentüren des Hybridfahrzeugs austreten, so dass auch im Falle eines Unfalls die Fahrzeuginsassen vor dem austretenden Gas und gegebenenfalls entstehenden Flammen geschützt sind.

Um zusätzlich zu einem Druckausgleich auch eine Flüssigkeitsdichtheit im Bereich der Entgasungsöffnung erreichen zu können, weist die mindestens eine Entgasungsöffnung erfindungsgemäß eine semipermeable Membran auf. Die semipermeable Membran kann sich beispielsweise über den gesamten Öffnungsquerschnitt der Entgasungsöffnung erstrecken, um diese entsprechend für Flüssigkeiten zu schließen und gleichzeitig für Gase, wie Luft, zu öffnen. Vorzugsweise ist an jeder Entgasungsöffnung eine semipermeable Membran angeordnet.

Um den Abstand zwischen Kraftstofftank und einem in dem Kraftfahrzeug angeordneten Verbrennungsmotor möglichst gering halten zu können, ist der mindestens eine Kraftstofftank bevorzugt benachbart zu der Frontseitenwand angeordnet. Durch eine derartige Positionierung des Kraftstofftanks können die Leitungen zwischen dem Kraftstofftank und dem Verbrennungsmotor möglichst kurz ausgebildet sein. Alternativ ist es aber auch möglich, dass der Kraftstofftank benachbart zu der Heckseitenwand angeordnet ist.

Bevorzugt ist es ferner vorgesehen, dass ein Aktivkohlefilter in dem Batteriegehäuse angeordnet ist. Der Aktivkohlefilter kann Kohlenwasserstoffe herausfiltern. Bevorzugt ist der Aktivkohlefilter zwischen dem Kraftstofftank und einer Wandung, beispielsweise der Frontseitenwand des Batteriegehäuses angeordnet.

Zudem ist es möglich, dass zwei oder mehr Kraftstofftanks in dem Batteriegehäuse angeordnet sind, welche hintereinander und/oder übereinander und/oder nebeneinander gestapelt angeordnet sein können. Hierdurch kann auch bei mehreren Kraftstofftanks in dem Batteriegehäuse eine kompakte Anordnung der Kraftstofftanks erreicht werden.

Die Lösung der erfindungsgemäßen Aufgabe erfolgt ferner mittels eines Hybridfahrzeugs, welches eine wie vorstehend beschriebene, aus- und weitergebildete Batterieeinheit aufweist. In Bezug auf die Vorteile des Hybridfahrzeugs wird auf die zur Batterieeinheit genannten Vorteile verwiesen.

Bevorzugt kann an einem Kotflügel eines Vorderrads oder eines Hinterrades des Hybridfahrzeugs ein Tankeinfüllstutzen angeordnet, welcher über eine Kraftstoffeinfüllleitung mit dem Kraftstofftank in dem Batteriegehäuse der Batterieeinheit verbunden sein kann. Durch eine derartige Anordnung des Tankeinfüllstutzens kann die Kraftstoffeinfüllleitung kürzer ausgebildet sein, da der Kraftstofftank vorzugsweise in Richtung der Fronseite des Hybridfahrzeugs angeordnet ist.

Nachfolgend wird die Erfindung unter Bezugnahme auf die anliegenden Zeichnungen anhand bevorzugter Ausführungsformen näher erläutert.

Es zeigen:
- Fig. 1: eine schematische Darstellung einer Batterieeinheit gemäß der Erfindung,
- Fig. 2: eine schematische Schnittdarstellung eines Batteriegehäuses gemäß der Erfindung,
- Fig. 3: eine schematische Schnittdarstellung eines Kraftstofftanks gemäß der Erfindung, und
- Fig. 4: eine schematische Darstellung eines Hybridfahrzeugs gemäß der Erfindung.

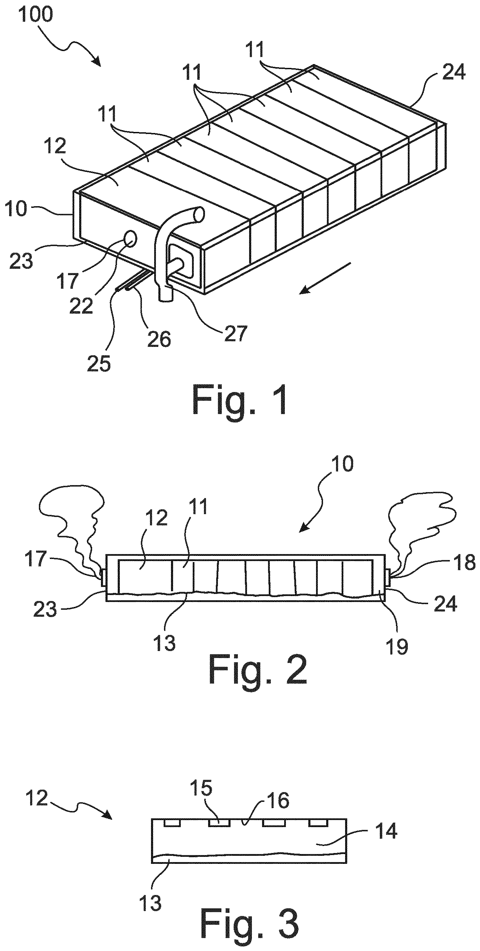

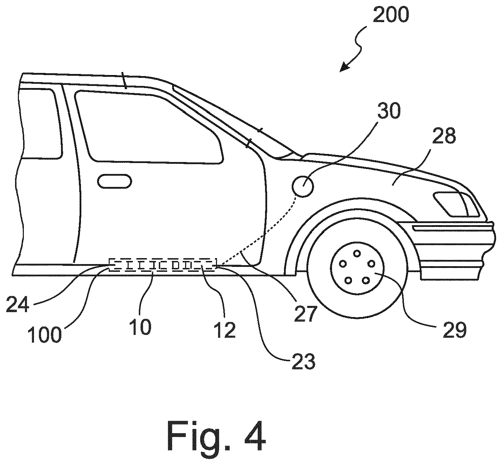

Fig. 1 zeigt schematisch eine Batterieeinheit 100 für ein wie in Fig. 4 gezeigtes Hybridfahrzeug 200.

Die Batterieeinheit 100 weist ein Batteriegehäuse 10 auf, innerhalb welchem mehrere Batteriemodule 11 zusammen mit einem Kraftstofftank 12, in welchem flüssiger Kraftstoff 13 gespeichert ist, angeordnet sind. Das Batteriegehäuse 10 umschließt den Kraftstofftank 12 und die Batteriemodule 11, so dass sowohl die Batteriemodule 11 als auch der Kraftstofftank 12 mittels des Batteriegehäuses 10 geschützt angeordnet sind.

Der Kraftstofftank 12 ist unmittelbar angrenzend an einem der Batteriemodule 11 angeordnet. Der Kraftstofftank 12 ist mit den Batteriemodulen 11 in einer Reihe hintereinander angeordnet. Der Kraftstofftank 12 ist mit den Batteriemodulen 11 in einem Paket angeordnet.

Anders als bei der hier gezeigten Ausgestaltung ist es auch möglich, dass Batteriemodule 11 nicht nur hintereinander, sondern auch nebeneinander und/oder übereinander gestapelt angeordnet sind. Ferner ist es auch möglich, dass nicht nur ein Kraftstofftank 12 in dem Batteriegehäuse 10 angeordnet ist, sondern es können auch zwei oder mehr Kraftstofftanks 12 in dem Batteriegehäuse 10 angeordnet sein, welche dann hintereinander und/oder übereinander und/oder nebeneinander gestapelt angeordnet sein können.

Wie in Fig. 1 zu erkennen ist, weist der Kraftstofftank 12 eine Außenkontur auf, welche an die Außenkontur der Batteriemodule 11 angepasst ist. Sowohl die Batteriemodule 11 als auch der Kraftstofftank 12 sind rechteckförmig bzw. kastenförmig ausgebildet. Der Kraftstofftank 12 weist die gleiche Länge und die gleiche Höhe auf wie die Batteriemodule 11. Lediglich hinsichtlich der Breite unterscheiden sich der Kraftstofftank 12 und die Batteriemodule 11 in ihren Außenabmaßen voneinander, wobei bei der hier gezeigten Ausgestaltung der Kraftstofftank 12 eine größere Breite aufweist als die einzelne Batteriemodule 11.

Die Batteriemodule 11 weisen jeweils ein Gehäuse auf, in welchem vorzugsweise mehrere Batteriezellen angeordnet sind, welche hier nicht gezeigt sind. Die Batteriemodule 11 dienen dazu, dem Hybridfahrzeug 200 elektrische Energie für den elektrischen Antrieb des Hybridfahrzeugs 200 zur Verfügung zu stellen.

Der Kraftstofftank 12 speichert flüssigen Kraftstoff, wie beispielsweise Benzin, für einen verbrennungsmotorischen Antrieb des Hybridfahrzeugs 200.

Der Kraftstofftank 12 ist aus einem Kunststoffmaterial ausgebildet, wobei der Kraftstofftank 12 in einem Spritzgussverfahren hergestellt werden kann. Dadurch, dass der Kraftstofftank 12 durch das Batteriegehäuse 10 geschützt ist, kann der Kraftstofftank 12 aus einem Kunststoffmaterial ausgebildet sein, welches insbesondere eine geringe Schlagzähigkeit bzw. Schlagfestigkeit aufweist.

Ausgebildet ist der Kraftstofftank 12 als Drucktank. Zur Stabilisierung des Kraftstofftanks 12, insbesondere gegenüber Unterdruck, weist der Kraftstofftank 12, wie in der Schnittdarstellung in Fig. 3 zu erkennen ist, mehrere in Richtung des Innenraumes 14 des Kraftstofftanks 12 gerichtete Einbuchtungen bzw. Rippen 15 auf, welche an einer in Richtung Innenraum 14 gerichteten Innenseite 16 des Kraftstofftanks 12 ausgebildet bzw. angeordnet sind.

Wie in Fig. 2 gezeigt ist, weist das Batteriegehäuse (10) zwei Entgasungsöffnungen 17, 18 auf, über welche ein Druckausgleich zwischen einem Innenraum 19 des Batteriegehäuses 10 und außerhalb des Batteriegehäuses 10 erfolgen kann. Bei der in Fig. 2 gezeigten Ausgestaltung weist das Batteriegehäuse 10 zwei Entgasungsöffnungen 17, 18 auf, wobei die erste Entgasungsöffnung 17 an der Frontseitenwand 23 des Batteriegehäuses 10 und die zweite Entgasungsöffnung 18 an der Heckseitenwand 24 des Batteriegehäuses 10 angeordnet ist.

Die Entgasungsöffnungen 17, 18 an dem Batteriegehäuse 10 sind mittels einer semipermeablen Membran 22 verschlossen, welche Gas, wie Luft, durchlässt und gegenüber Flüssigkeiten sperrt, so dass keine Flüssigkeit in das Batteriegehäuse 10 über die Entgasungsöffnungen 17, 18 eintreten bzw. austreten kann.

Im Falle eines Anstiegs der Temperatur in dem Kraftstofftank 12 und/oder in dem Batteriemodulen 11 und dadurch in dem Batteriegehäuse 10 kann über die Entgasungsöffnungen 17, 18 Gas, insbesondere Luft, entweichen. Steigt die Temperatur sehr stark an, kann es passieren, dass Kraftstoff 13 aus dem Kraftstofftank 12 in den Innenraum 19 des Batteriegehäuses 10 fließen kann, wie in Fig. 2 schematisch angedeutet ist, und sich an den Batteriemodulen 11 entzünden kann. Die dabei entstehenden Gase können über die Entgasungsöffnungen 17, 18 des Batteriegehäuses 10 kontrolliert entweichen. Durch die Anordnung einer Entgasungsöffnung 17 an der Frontseitenwand 23 und einer Entgasungsöffnung 18 an der Heckseitenwand 24 des Batteriegehäuses 10 kann das Gas entfernt von den Fahrzeugtüren des Hybridfahrzeugs 200 entweichen. Dadurch kann ein Aussteigen und/oder Bergen von Fahrzeuginsassen im Falle eines Unfalls vereinfacht werden und die Gefahr eines Verletzens der Fahrzeuginsassen durch heißes, ausströmendes Gas reduziert werden. Durch die spezielle Positionierung der Entgasungsöffnungen 17, 18 an dem Batteriegehäuse 10 kann zudem die Gefahr des Auslaufens von Kraftstoff 13 aus dem Innenraum 19 des Batteriegehäuses 10 im Falle eines Überschlages des Hybridfahrzeugs 200 reduziert oder sogar verhindert werden.

Innerhalb des Batteriegehäuses 10 ist der Kraftstofftank 12 unmittelbar benachbart bzw. angrenzend zu der Frontseitenwand 23 des Batteriegehäuses 10 angeordnet, so dass der Kraftstofftank 12 in mit dem Pfeil gekennzeichneten Fahrtrichtung des Hybridfahrzeugs 200 vorne angeordnet ist. Die Batteriemodule 11 sind ausgehend von der Frontseitenwand 23 des Batteriegehäuses 10 hinter dem Kraftstofftank 12 angeordnet.

Aus dem Batteriegehäuse 10 herausgeführt ist eine Kraftstoffleitung 25, über welche Kraftstoff aus dem Kraftstofftank 12 hin zu einem hier nicht gezeigten Verbrennungsmotor geführt werden kann. Ferner ist aus dem Batteriegehäuse 10 eine elektrische Leitung 26 herausgeführt, welche die Batteriemodule 11 mit einem hier nicht gezeigten Elektromotor innerhalb des Hybridfahrzeugs 200 elektrisch verbinden kann.

Zudem ist an dem Batteriegehäuse 10 eine Kraftstoffeinfüllleitung 27 angeordnet, über welche Kraftstoff 13 in den Kraftstofftank 12 eingefüllt werden kann. Wie in Fig. 4 zu erkennen ist, ist die hier gestrichelt dargestellte Kraftstoffeinfüllleitung 27 mit einem an einem Kotflügel 28 eines Vorderrads 29 des Hybridfahrzeugs 200 angeordneten Tankeinfüllstutzen 30 verbunden, über welchen ein Betanken des Kraftstofftanks 12 mit Kraftstoff 13 erfolgen kann.

### Bezugszeichenliste

- 100: Batterieeinheit
- 200: Hybridfahrzeug
- 10: Batteriegehäuse
- 11: Batteriemodul
- 12: Kraftstofftank
- 13: Kraftstoff
- 14: Innenraum
- 15: Einbuchtung/Rippe
- 16: Innenseite
- 17: Entgasungsöffnung
- 18: Entgasungsöffnung
- 19: Innenraum
- 22: Semipermeable Membran
- 23: Frontseitenwand
- 24: Heckseitenwand
- 25: Kraftstoffleitung
- 26: Elektrische Leitung
- 27: Kraftstoffeinfüllleitung
- 28: Kotflügel
- 29: Vorderrad
- 30: Tankeinfüllstutzen

## Patentansprüche

1. Batterieeinheit (100) für ein Hybridfahrzeug (200), mit einem Batteriegehäuse (10), welches eine in Richtung Frontseite (22) des Hybridfahrzeugs (200) gerichtete Frontseitenwand (23) und eine in Richtung Heckseite des Hybridfahrzeugs (200) gerichtete Heckseitenwand (24) aufweist, und mit mindestens einem in dem Batteriegehäuse (10) angeordneten Batteriemodul (11), wobei in dem Batteriegehäuse (10) mindestens ein Kraftstofftank (12) angeordnet ist, wobei das Batteriegehäuse (10) mindestens eine Entgasungsöffnung (17, 18) für einen kontrollierten Druckabbau in einem Innenraum des Batteriegehäuses aufweist, **dadurch gekennzeichnet, dass** das Batteriegehäuse (10) den Kraftstofftank (12) zusammen mit dem mindestens einen Batteriemodul (11) vollständig umschließt, wobei die mindestens eine Entgasungsöffnung (17, 18) eine semipermeable Membran aufweist.

2. Batterieeinheit (100) nach Anspruch 1, **dadurch gekennzeichnet, dass** der mindestens eine Kraftstofftank (12) aus einem Kunststoffmaterial ausgebildet ist.

3. Batterieeinheit (100) nach Anspruch 2, **dadurch gekennzeichnet, dass** der mindestens eine Kraftstofftank (12) in einem Spritzgussverfahren oder in einem Blasformverfahren hergestellt ist.

4. Batterieeinheit (100) nach einem der Ansprüche 1 bis 3, **dadurch gekennzeichnet, dass** der mindestens eine Kraftstofftank (12) mit dem mindestens einem Batteriemodul (11) in einer Reihe hintereinander angeordnet ist.

5. Batterieeinheit (100) nach einem der Ansprüche 1 bis 4, **dadurch gekennzeichnet, dass** der mindestens eine Kraftstofftank (12) eine Außenkontur aufweist, welche an eine Außenkontur des mindestens einen Batteriemoduls (11) angepasst ist.

6. Batterieeinheit (100) nach einem der Ansprüche 1 bis 5, **dadurch gekennzeichnet, dass** der mindestens eine Kraftstofftank (12) als Drucktank ausgebildet ist.

7. Batterieeinheit (100) nach einem der Ansprüche 1 bis 6, **dadurch gekennzeichnet, dass** der mindestens eine Kraftstofftank (12) ein oder mehrere in Richtung eines Innenraums (14) des Kraftstofftanks (12) ausgebildete Einbuchtungen (15) und/oder ein oder mehrere an einer Innenseite (16) des Kraftstofftanks (12) ausgebildete Rippen (15) aufweist.

8. Batterieeinheit (100) nach einem der Ansprüche 1 bis 7, **dadurch gekennzeichnet, dass** das Batteriegehäuse (10) eine erste Entgasungsöffnung (17) und eine zweite Entgasungsöffnung (18) aufweist, wobei die erste Entgasungsöffnung (17) an der Frontseitenwand des Batteriegehäuses und die zweite Entgasungsöffnung (18) an der Heckseitenwand (23) des Batteriegehäuses (10) angeordnet ist.

9. Batterieeinheit (100) nach einem der Ansprüche 1 bis 8, **dadurch gekennzeichnet, dass** der mindestens eine Kraftstofftank (12) in dem Batteriegehäuse (10) benachbart zu der Frontseitenwand (23) angeordnet ist.

10. Batterieeinheit (100) nach einem der Ansprüche 1 bis 9, **dadurch gekennzeichnet, dass** ein Aktivkohlefilter in dem Batteriegehäuse (10) angeordnet ist.

11. Batterieeinheit (100) nach einem der Ansprüche 1 bis 10, **dadurch gekennzeichnet, dass** zwei oder mehr Kraftstofftanks (12) in dem Batteriegehäuse (10) angeordnet sind, welche hintereinander und/oder übereinander und/oder nebeneinander gestapelt angeordnet sind.

12. Hybridfahrzeug (200), mit einer nach einem der Ansprüche 1 bis 11 ausgebildeten Batterieeinheit (100).

13. Hybridfahrzeug (200) nach Anspruch 12, **dadurch gekennzeichnet, dass** an einem Kotflügel (28) eines Vorderrads (29) oder eines Hinterrades des Hybridfahrzeugs (200) ein Tankeinfüllstutzen (30) angeordnet ist, welcher über eine Kraftstoffeinfüllleitung (27) mit dem Kraftstofftank (12) in dem Batteriegehäuse (10) der Batterieeinheit (100) verbunden ist.

## Claims

1. Battery unit (100) for a hybrid vehicle (200), comprising a battery housing (10) which has a front side wall (23) directed toward the front side (22) of the hybrid vehicle (200) and a rear side wall (24) directed toward the rear side of the hybrid vehicle (200), and comprising at least one battery module (11) arranged in the battery housing (10), at least one fuel tank (12) being arranged in the battery housing (10), the battery housing (10) having at least one degassing opening (17, 18) for controlled pressure reduction in an interior of the battery housing, **characterized in that** the battery housing (10) completely encloses the fuel tank (12) together with the at least one battery module (11), the at least one degassing opening (17, 18) having a semipermeable membrane.

2. Battery unit (100) according to claim 1, **characterized in that** the at least one fuel tank (12) is made from a plastics material.

3. Battery unit (100) according to claim 2, **characterized in that** the at least one fuel tank (12) is produced in an injection molding process or in a blow molding process.

4. Battery unit (100) according to one of claims 1 to 3, **characterized in that** the at least one fuel tank (12) and the at least one battery module (11) are arranged in a row one behind the other.

5. Battery unit (100) according to one of claims 1 to 4, **characterized in that** the at least one fuel tank (12) has an outer contour which is adapted to an outer contour of the at least one battery module (11).

6. Battery unit (100) according to one of claims 1 to 5, **characterized in that** the at least one fuel tank (12) is designed as a pressure tank.

7. Battery unit (100) according to one of claims 1 to 6, **characterized in that** the at least one fuel tank (12) has one or more indentations (15) formed in the direction of an interior (14) of the fuel tank (12) and/or one or more ribs (15) formed on an inside (16) of the fuel tank (12).

8. Battery unit (100) according to one of claims 1 to 7, **characterized in that** the battery housing (10) has a first degassing opening (17) and a second degassing opening (18), the first degassing opening (17) being arranged on the front side wall of the battery housing and the second degassing opening (18) being arranged on the rear side wall (23) of the battery housing (10).

9. Battery unit (100) according to one of claims 1 to 8, **characterized in that** the at least one fuel tank (12) is arranged in the battery housing (10) adjacent to the front side wall (23).

10. Battery unit (100) according to one of claims 1 to 9, **characterized in that** an activated carbon filter is arranged in the battery housing (10).

11. Battery unit (100) according to one of claims 1 to 10,
**characterized in that** two or more fuel tanks (12) are arranged in the battery housing (10), which are arranged so as to be stacked one behind the other and/or one on top of the other and/or one next to the other.

12. Hybrid vehicle (200), comprising a battery unit (100) designed according to one of claims 1 to 11.

13. Hybrid vehicle (200) according to claim 12, **characterized in that** a tank filler neck (30) is arranged on a fender (28) of a front wheel (29) or a rear wheel of the hybrid vehicle (200), which tank filler neck is connected via a fuel filler line (27) to the fuel tank (12) in the battery housing (10) of the battery unit (100).

## Revendications

1. Unité formant batterie (100) pour un véhicule hybride (200), comportant un boîtier de batterie (10) qui présente une paroi côté avant (23) orientée en direction du côté avant (22) du véhicule hybride (200) et une paroi côté arrière (24) orientée en direction du côté arrière du véhicule hybride (200), et comportant au moins un module de batterie (11) disposé dans le boîtier de batterie (10), dans laquelle au moins un réservoir de carburant (12) est disposé dans le boîtier de batterie (10), dans laquelle le boîtier de batterie (10) présente au moins un orifice de dégazage (17, 18) pour une réduction contrôlée de pression dans un espace intérieur du boîtier de batterie, **caractérisée en ce que** le boîtier de batterie (10) entoure complètement le réservoir de carburant (12) conjointement avec l'au moins un module de batterie (11), dans laquelle l'au moins un orifice de dégazage (17, 18) présente une membrane semi-perméable.

2. Unité formant batterie (100) selon la revendication 1,
**caractérisée en ce que** l'au moins un réservoir de carburant (12) est réalisé à partir d'un matériau en matière plastique.

3. Unité formant batterie (100) selon la revendication 2,
**caractérisée en ce que** l'au moins un réservoir de carburant (12) est fabriqué par un procédé de moulage par injection ou par un procédé de formage par soufflage.

4. Unité formant batterie (100) selon l'une des revendications 1 à 3, **caractérisée en ce que** l'au moins un réservoir de carburant (12) et l'au moins un module de batterie (11) sont disposés en série l'un derrière l'autre.

5. Unité formant batterie (100) selon l'une des revendications 1 à 4, **caractérisée en ce que** l'au moins un réservoir de carburant (12) présente un contour extérieur qui est adapté à un contour extérieur de l'au moins un module de batterie (11).

6. Unité formant batterie (100) selon l'une des revendications 1 à 5, **caractérisée en ce que** l'au moins un réservoir de carburant (12) est réalisé sous forme de récipient pour fluides sous pression.

7. Unité formant batterie (100) selon l'une des revendications 1 à 6, **caractérisée en ce que** l'au moins un réservoir de carburant (12) présente un ou plusieurs renfoncements (15) réalisés en direction d'un espace intérieur (14) du réservoir de carburant (12) et/ou une ou plusieurs nervures (15) réalisées sur un côté intérieur (16) du réservoir de carburant (12).

8. Unité formant batterie (100) selon l'une des revendications 1 à 7, **caractérisée en ce que** le boîtier de batterie (10) présente un premier orifice de dégazage (17) et un second orifice de dégazage (18), dans laquelle le premier orifice de dégazage (17) est disposé sur la paroi côté avant du boîtier de batterie et le second orifice de dégazage (18) est disposé sur la paroi côté arrière (23) du boîtier de batterie (10).

9. Unité formant batterie (100) selon l'une des revendications 1 à 8, **caractérisée en ce que** l'au moins un réservoir de carburant (12) est disposé dans le boîtier de batterie (10) de manière adjacente à la paroi côté avant (23).

10. Unité formant batterie (100) selon l'une des revendications 1 à 9, **caractérisée en ce qu'**un filtre à charbon actif est disposé dans le boîtier de batterie (10).

11. Unité formant batterie (100) selon l'une des revendications 1 à 10, **caractérisée en ce que** deux réservoirs de carburant (12) ou plus sont disposés dans le boîtier de batterie (10), lesquels sont disposés de manière empilée les uns derrière les autres et/ou les uns au-dessus des autres et/ou les uns à côté des autres.

12. Véhicule hybride (200), comportant une unité formant batterie (100) réalisée selon l'une des revendications 1 à 11.

13. Véhicule hybride (200) selon la revendication 12,
**caractérisé en ce qu'**une tubulure de remplissage de réservoir (30) est disposée sur un garde-boue (28) d'une roue avant (29) ou d'une roue arrière du véhicule hybride (200), laquelle tubulure de remplissage de réservoir est raccordée au réservoir de carburant (12) dans le boîtier de batterie (10) de l'unité formant batterie (100) par l'intermédiaire d'une conduite de remplissage de carburant (27).
